# DEMANDE DE BREVET EUROPEEN

(11) **EP 1 792 784 A1**
(43) Date de publication de la demande: **06.06.2007**
(21) Numéro de dépôt: 06291831.3
(22) Date de dépôt: 28.11.2006
(51) Int. Cl.: B60R 13/08

(54) **Panneau double coque à cavités intégrées pour véhicule automobile et son procédé de fabrication**

(30) Priorité: 30.11.2005 FR 0512170
(71) Demandeur: Centre d'etude et de recherche pour l'automobile (CERA), 51100 Reims (FR)
(72) Inventeur: Brillon, Eric, 51140 Chalons-sur-Vesle (FR)
(74) Mandataire: Sayettat, Julien Christian

(57) **Abrégé**

L'invention concerne un panneau (1) structurel et de protection acoustique de véhicule automobile, ledit panneau comprenant, empilés l'un sur l'autre :
• une peau inférieure (2) à base de matériau poreux,
• une pièce structurelle (3) comprenant au moins un bossage (4) définissant une cavité inférieure (5) avec ladite peau inférieure,
• un corps en mousse (6) sensiblement rigide enrobant au moins une partie de la surface supérieure de ladite pièce structurelle et imprégnant partiellement ladite peau inférieure dans son épaisseur, dans au moins une zone écartée dudit bossage,
• une peau supérieure (7) à base de matériau poreux, ladite peau étant partiellement imprégnée de mousse (6) dans son épaisseur.

## Description

L'invention concerne un panneau structurel et de protection acoustique de véhicule automobile et un procédé de réalisation d'un tel panneau.

On connaît un panneau structurel de véhicule automobile, tel qu'une tablette arrière ou un faux-plancher, tel que décrit par exemple dans le document FR-A1-2 864 922, comprenant une peau inférieure et une peau supérieure à base de matériau poreux et un corps en mousse sensiblement rigide, notamment de type polyuréthanne, ladite mousse imprégnant partiellement lesdites peaux dans leur épaisseur sur sensiblement toute leur surface.

Le panneau ainsi réalisé présente une grande résistance en flexion, ceci du fait de l'imprégnation des peaux par la mousse et de « l'effet de poutre » obtenu par cet agencement.

Cependant, un tel panneau présente des propriétés de protection acoustique non optimisées, les nuisances sonores n'étant que faiblement atténuées par absorption dans la partie poreuse résiduelle des peaux.

Pour y remédier, il peut être prévu de recouvrir la peau disposée en regard de la source sonore d'une couche fibreuse d'épaisseur importante, présentant des propriétés d'absorption acoustique, par exemple d'épaisseur 12 mm, ce qui entraîne un surpoids, un encombrement accru et un surcoût de fabrication.

L'invention a pour but de pallier cet inconvénient en proposant un panneau de résistance en flexion similaire, basée sur un agencement analogue, qui présente en outre des propriétés d'absorption améliorées, et ceci avec un allègement du panneau, sans encombrement supplémentaire et une moindre utilisation de mousse, ce qui diminue les coûts de fabrication.

A cet effet, et selon un premier aspect, l'invention propose un panneau structurel et de protection acoustique de véhicule automobile, ledit panneau comprenant, empilés l'un sur l'autre :
- une peau inférieure à base de matériau poreux,
- une pièce structurelle comprenant au moins un bossage définissant une cavité inférieure avec ladite peau inférieure,
- un corps en mousse sensiblement rigide enrobant au moins une partie de la surface supérieure de ladite pièce structurelle et imprégnant partiellement ladite peau inférieure dans son épaisseur, dans au moins une zone écartée dudit bossage,
- une peau supérieure à base de matériau poreux, ladite peau étant partiellement imprégnée de mousse dans son épaisseur.

Un tel agencement confère au panneau une grande résistance en flexion, basée sur l'imprégnation des peaux par la mousse, ce qui a pour effet de les rigidifier, et sur « l'effet de poutre » qui est mis en oeuvre. En outre, l'intégration de la pièce structurelle dans la mousse contribue à l'augmentation de la résistance en flexion du panneau.

Par ailleurs, les propriétés d'absorption du panneau sont améliorées, les ondes sonores pénétrant, au travers de la peau inférieure, dans la ou les cavités qui forment des résonateurs permettant l'atténuation du bruit.

Par ailleurs, un tel résultat est obtenu avec un allègement du panneau, correspondant à la présence de la ou des cavités, et ceci sans encombrement supplémentaire et avec une moindre utilisation de mousse, ce qui diminue les coûts de fabrication.

Selon un deuxième aspect, l'invention propose un procédé de réalisation d'un panneau selon l'invention, ledit procédé comprenant les étapes suivantes :
- prévoir une peau inférieure et une peau supérieure à base de matériau poreux agencé pour permettre, dans les conditions d'un moulage par injection-réaction (RIM), une pénétration partielle de mousse dans leur épaisseur, de sorte à les rigidifier,
- prévoir une pièce structurelle comprenant au moins un bossage et au moins un orifice écarté dudit bossage,
- disposer ladite peau inférieure contre la paroi d'un moule de moulage RIM,
- disposer ladite pièce structurelle contre ladite peau inférieure de sorte à former au moins une cavité inférieure, correspondant audit bossage, entre ladite pièce structurelle et ladite peau inférieure,
- disposer ladite peau supérieure contre ladite pièce structurelle, ladite peau supérieure plaquant, à l'écart dudit bossage, ladite pièce structurelle contre ladite peau inférieure,
- injecter un mélange précurseur de mousse sensiblement rigide dans l'espace compris entre ladite pièce structurelle et ladite peau supérieure, de sorte à remplir ledit espace avec ladite mousse une fois expansée ladite mousse imprégnant partiellement l'épaisseur de ladite couche supérieure, ladite mousse traversant en outre ledit orifice pour imprégner partiellement l'épaisseur de ladite peau inférieure en regard dudit orifice.

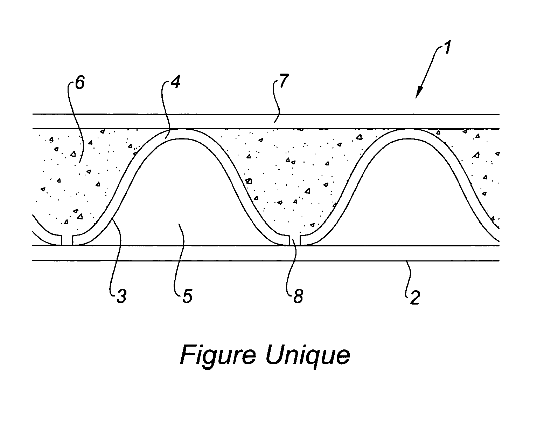

D'autres particularités et avantages de l'invention apparaîtront dans la description qui suit, faite en référence à la figure jointe qui est une représentation schématique partielle en coupe d'un panneau selon un mode de réalisation de l'invention.

En référence à la figure, on décrit à présent un panneau 1 structurel et de protection acoustique de véhicule automobile, tel qu'une tablette arrière ou un faux plancher, ledit panneau comprenant, empilés l'un sur l'autre :
- une peau inférieure 2 à base de matériau poreux,
- une pièce structurelle 3 comprenant au moins un bossage 4 définissant une cavité inférieure 5 avec ladite peau inférieure,
- un corps en mousse 6 sensiblement rigide enrobant au moins une partie de la surface supérieure de ladite pièce structurelle et imprégnant partiellement ladite peau inférieure dans son épaisseur, dans au moins une zone écartée dudit bossage,
- une peau supérieure 7 à base de matériau poreux, ladite peau étant partiellement imprégnée de mousse dans son épaisseur, ladite peau supérieure étant imprégnée sur sensiblement toute sa surface.

Selon une réalisation, les peaux 2,7 sont à base de matériau fibreux tel qu'un feutre.

Selon une réalisation, la pièce structurelle 3 est à base de fibre de cellulose, notamment de type carton de grande porosité. En variante, la pièce structurelle 3 peut être réalisée à base d'un matériau de type feutre, voire d'un matériau thermoplastique thermoformé.

Selon la réalisation de la figure, la pièce structurelle 3 comprend une pluralité de bossages 4 et au moins un orifice 8 écarté desdits bossages, la peau inférieure 2 étant partiellement imprégnée de mousse en regard dudit orifice, ladite mousse traversant ledit orifice.

En particulier, la pièce structurelle 3 comprend une pluralité d'orifices 8 qui sont formés respectivement entre chaque bossage 4, lesdits orifices étant en contact avec la peau inférieure 2.

Selon une réalisation non représentée, au moins l'une des peaux 2,7 comprend une bavette, ladite bavette étant rembordée sur tout ou partie de la périphérie dudit panneau de sorte à former finition périphérique.

Selon une réalisation non représentée, le panneau 1 comprend au moins un organe fonctionnel, tel qu'une fixation, surmoulé par le corps en mousse 6. Un tel organe peut comprendre une zone d'ancrage dans la mousse 6 et une zone formant saillie par rapport au panneau, ledit organe traversant l'une des peaux 2,7 par un trou prévu à cet effet. Du fait de la rigidification de la peau 2,7 par l'imprégnation partielle de mousse 6 dans son épaisseur, l'organe est solidement ancré dans le panneau 1.

On décrit à présent un procédé de réalisation d'un panneau 1 selon l'invention, ledit procédé comprenant les étapes suivantes :
- prévoir une peau inférieure 2 et une peau supérieure 7 à base de matériau poreux agencé pour permettre, dans les conditions d'un moulage par injection-réaction (RIM), une pénétration partielle de mousse 6 dans leur épaisseur, de sorte à les rigidifier,
- prévoir une pièce structurelle 3 comprenant au moins un bossage 4 et au moins un orifice 8 écarté dudit bossage,
- disposer ladite peau inférieure contre la paroi d'un moule de moulage RIM,
- disposer ladite pièce structurelle contre ladite peau inférieure de sorte à former au moins une cavité inférieure 5, correspondant audit bossage, entre ladite pièce structurelle et ladite peau inférieure,
- disposer ladite peau supérieure contre ladite pièce structurelle, ladite peau supérieure plaquant, à l'écart dudit bossage, ladite pièce structurelle contre ladite peau inférieure,
- injecter un mélange précurseur de mousse 6 sensiblement rigide dans l'espace compris entre ladite pièce structurelle et ladite peau supérieure, de sorte à remplir ledit espace avec ladite mousse une fois expansée, ladite mousse imprégnant partiellement l'épaisseur de ladite couche supérieure, ladite mousse traversant en outre ledit orifice pour imprégner partiellement l'épaisseur de ladite peau inférieure en regard dudit orifice.

Un tel procédé peut comprendre en outre une étape de mise en forme tridimensionnelle d'au moins une peau 2,7 avant sa mise en place dans le moule, par exemple par thermoformage, ceci de sorte à réaliser un panneau 1 d'aspect géométrique optimisé.

## Revendications

1. Panneau (1) structurel et de protection acoustique de véhicule automobile, ledit panneau comprenant, empilés l'un sur l'autre :
• une peau inférieure (2) à base de matériau poreux,
• une pièce structurelle (3) comprenant au moins un bossage (4) définissant une cavité inférieure (5) avec ladite peau inférieure,
• un corps en mousse (6) sensiblement rigide enrobant au moins une partie de la surface supérieure de ladite pièce structurelle et imprégnant partiellement ladite peau inférieure dans son épaisseur, dans au moins une zone écartée dudit bossage,
• une peau supérieure (7) à base de matériau poreux, ladite peau étant partiellement imprégnée de mousse (6) dans son épaisseur.

2. Panneau selon la revendication 1, **caractérisé en ce que** les peaux (2,7) sont à base de matériau fibreux.

3. Panneau selon la revendication 1 ou 2, **caractérisé en ce que** la pièce structurelle (3) est à base de fibre de cellulose.

4. Panneau selon l'une quelconque des revendications 1 à 3, **caractérisé en ce que** la pièce structurelle (3) comprend une pluralité de bossages (4) et au moins un orifice (8) écarté desdits bossages, la peau inférieure (2) étant partiellement imprégnée de mousse (6) en regard dudit orifice, ladite mousse traversant ledit orifice.

5. Panneau selon la revendication 4, **caractérisé en ce que** la pièce structurelle (3) comprend une pluralité d'orifices (8) qui sont formés respectivement entre chaque bossage (4), lesdits orifices étant en contact avec la peau inférieure (2).

6. Panneau selon l'une quelconque des revendications 1 à 5, **caractérisé en ce qu'**au moins l'une des peaux (2,7) comprend une bavette, ladite bavette étant rembordée sur tout ou partie de la périphérie dudit panneau de sorte à former finition périphérique.

7. Panneau selon l'une quelconque des revendications 1 à 6, **caractérisé en ce qu'**il comprend au moins un organe fonctionnel surmoulé par le corps en mousse (6).

8. Procédé de réalisation d'un panneau (1) selon l'une quelconque des revendications 4 à 7, ledit procédé comprenant les étapes suivantes :
• prévoir une peau inférieure (2) et une peau supérieure (7) à base de matériau poreux agencé pour permettre, dans les conditions d'un moulage par injection-réaction (RIM), une pénétration partielle de mousse (6) dans leur épaisseur, de sorte à les rigidifier,
• prévoir une pièce structurelle (3) comprenant au moins un bossage (4) et au moins un orifice (8) écarté dudit bossage,
• disposer ladite peau inférieure contre la paroi d'un moule de moulage RIM,
• disposer ladite pièce structurelle contre ladite peau inférieure de sorte à former au moins une cavité inférieure (5), correspondant audit bossage, entre ladite pièce structurelle et ladite peau inférieure,
• disposer ladite peau supérieure contre ladite pièce structurelle, ladite peau supérieure plaquant, à l'écart dudit bossage, ladite pièce structurelle contre ladite peau inférieure,
• injecter un mélange précurseur de mousse (6) sensiblement rigide dans l'espace compris entre ladite pièce structurelle et ladite peau supérieure, de sorte à remplir ledit espace avec ladite mousse une fois expansée, ladite mousse imprégnant partiellement l'épaisseur de ladite couche supérieure, ladite mousse traversant en outre ledit orifice pour imprégner partiellement l'épaisseur de ladite peau inférieure en regard dudit orifice.

9. Procédé selon la revendication 8, **caractérisé en ce qu'**il comprend en outre une étape de mise en forme tridimensionnelle d'au moins une peau (2,7) avant sa mise en place dans le moule.
